# EUROPEAN PATENT APPLICATION

(11) **EP 4 474 233 A1**
(43) Date of publication of application: **11.12.2024**
(21) Application number: 23178357.2
(22) Date of filing: 09.06.2023
(51) Int. Cl.: B60T 13/66, B60T 8/17, B60T 13/74, B60T 17/22

(54) **BRAKE ACTUATOR, COMPUTER-IMPLEMENTED METHOD, COMPUTER PROGRAM, NON-VOLATILE DATA CARRIER AND BRAKE SYSTEM FOR A RAIL VEHICLE**

(71) Applicant: Dellner Bubenzer AB, 781 70 Borlänge (SE)
(72) Inventor: SLUTEJ, Davor, 724 82 Västerås (SE); PRIM, Viktor, 811 61 Sandviken (SE)
(74) Representative: Brann AB

(57) **Abstract**

In a rail vehicle (100), a brake actuator (120) receives a brake command (BC) specifying a target force. In response to the brake command (BC), the brake actuator (120) controls an electrically operated brake unit (130) to perform a braking operation. The brake actuator (120) contains a control unit that generates a brake control signal (BS) based on the brake command (BC). The brake control signal (BS), in turn, controls an electric motor (131) in the electrically operated brake unit (130), such that an output shaft of the electric motor (131) attains a specified angular position in which at least one pressing member (135) is caused to apply a force against a rotating member (136) being mechanically connected to a wheel axle (141) of the rail vehicle (100), which applied force has the target force as a set point. The control unit also obtains a first sensor signal (Pₘ) reflecting a measured position of the output shaft of the electric motor (131), which measured position indicates the specified angular position, and thus informs the control unit when the at least one pressing member (135) applies the target force to the rotating member (136).

## Description

### TECHNICAL FIELD

The present invention relates generally to retardation of rail vehicles. Especially, the invention relates to a brake actuator according to the preamble of claim 1. The invention also relates to a computer-implemented method performed by a control unit of the brake actuator, a computer program and a non-volatile data carrier storing such a computer program. Moreover, the invention pertains to a brake system including the proposed brake actuator.

### BACKGROUND

The braking system of a rail vehicle is employed to decelerate the rail vehicle, and usually also to implement a parking brake function. Typically, the same brakes are used both for service braking and emergency braking. Naturally, for all brake functions, it is of utmost importance that the braking system does not malfunction, or fail.

Today's rail vehicles are often regulated using compressed air, known as pneumatically regulated brakes. One disadvantage of such pneumatic brakes is that they cannot be regulated quickly. More important, an air leakage in a pneumatic braking system risks resulting in a severely reduced braking capacity. Therefore, inter alia for safety reasons, various kinds of electrically controlled braking systems begin to emerge on the market.

US 2020/0198605 shows a microcomputer-controlled electromechanical braking system that comprises an electromechanical braking control device and an electromechanical braking unit. The electromechanical braking control device comprises a braking microcomputer control unit, an electromechanical control unit and a standby power supply module. The braking microcomputer control unit receives a braking instruction signal sent by a driver or an automatic driving system, performs the calculation of a target braking force and braking management, and at the same time, can communicate with braking microcomputer control units of other vehicles in a train group.

Although, typically, an electromechanical braking system can be controlled substantially quicker than a pneumatic braking system, there is room for improving the response time of today's electromechanical braking solutions. For example, the feedback loop from the braking device to the brake actuator causes an undesired latency during the braking process.

### SUMMARY

The object of the present invention is therefore to offer a solution that mitigates the above problem and enables swift and consistent braking of a rail vehicle at maintained or improved reliability.

According to one aspect of the invention, the object is achieved by a brake actuator for a rail vehicle, which brake actuator is configured to receive a brake command specifying a target force, and in response to the brake command, control an electrically operated brake unit to perform a braking operation. The brake actuator, in turn, contains a control unit configured to generate a brake control signal based on the brake command. The brake control signal is adapted to control an electric motor in the electrically operated brake unit, such that an output shaft of the electric motor attains a specified angular position in which at least one pressing member is caused to apply a force against a rotating member being mechanically connected to a wheel axle of the rail vehicle, which applied force has the target force as a set point. The brake actuator is also configured to obtain a first sensor signal reflecting a measured position of the output shaft of the electric motor. The measured position indicates the specified angular position, and thus also constitutes an indication of the target force.

The above brake actuator is advantageous because it enables controlling the at least one pressing member exclusively based on the first sensor signal, which may be obtained from an absolute encoder producing ubiquitous angular data, for example on a digital format. Consequently, the brake control process may be executed at minimal latency and error margin.

According to one embodiment of this aspect of the invention, the control unit is configured to generate the brake control signal until the first sensor signal attains a value indicating that the target force is estimated to have been reached. For example, the electric motor may be a brushless DC motor, and the brake control signal may cause a drive current to the electric motor to be produced, which drive current is produced until the specified angular position and target force have been reached. Thereby, the brake unit may be operated in a very straightforward manner.

According to another embodiment of this aspect of the invention, the control unit is configured to obtain a second sensor signal reflecting a magnitude of the applied force. Hence, the second sensor signal may be obtained from a load-cell sensor. The control unit is further configured to check the second sensor signal against a force-to-position mapping describing a linear relationship between the specified angular position and an estimated magnitude of the applied force. In other words, the control unit verifies that the target force was reached. Thereby, any deviations from the relationship expressed by the force-to-position mapping may be identified.

Preferably, the control unit is configured to await checking the second sensor signal against the force-to-position mapping until after having obtained the indication via the first sensor signal to the effect that the specified angular position and the target force have been attained. Namely, this reduces the verification time, and thus involves minimal latency.

According to yet another embodiment of this aspect of the invention, the force-to-position mapping reflects an expected delay between generating the brake control signal and obtaining the second sensor signal. Thereby, the electric motor may be controlled to a position at which the target force is applied even quicker. Here, the delay is presumed to be introduced by the inertia of the electric motor as such, and/or at least one component included in a control loop for the electric motor, which control loop is arranged between the control unit and the electric motor.

The control loop may for example contain a driver unit, which is configured to generate a drive current to the electric motor based on the brake control signal. Alternatively, or additionally, the control loop may contain a filter unit configured to obtain an unfiltered sensor signal, e.g. from the above-mentioned absolute encoder, and in response thereto produce the second sensor signal as a lowpass-filtered version of the unfiltered sensor signal. This is beneficial because it reduces noise and renders the design less sensitive to movements, such as in the form of rumble and jerk.

According to still another embodiment of this aspect of the invention, the control unit is configured to generate an alarm, if, for the specified angular position, the second sensor signal reflects that the applied force is outside of an hysteresis margin from said linear relationship. Namely, this indicates an anomaly that should be attended to.

According to a further embodiment of this aspect of the invention, the brake actuator is configured to receive the brake command from a brake controller, which, in turn, is configured to send brake commands to at least one further brake actuator in the rail vehicle. Thereby, it is uncomplicated to incorporate the control unit the rail vehicle's braking system.

According to another aspect of the invention, the object is achieved by a computer-implemented method for controlling an electrically operated brake unit in a rail vehicle, which method is performed in processing unit of a control unit in the proposed brake actuator. The method involves: receiving a brake command, and in response thereto, controlling an electrically operated brake unit to perform a braking operation. The method further involves generating a brake control signal based on the brake command, which specifies a target force. The brake control signal is adapted to control an electric motor in the electrically operated brake unit, such that an output shaft of the electric motor attains a specified angular position in which at least one pressing member is caused to apply a force against a rotating member being mechanically connected to a wheel axle of the rail vehicle, which applied force has the target force as a set point. Moreover, the method involves obtaining a first sensor signal reflecting a measured position of the output shaft of the electric motor, which measured position constitutes an indication of the specified angular position, and thus also the target force. The advantages of this method, as well as the preferred embodiments thereof, are apparent from the discussion above with reference to the proposed brake controller.

According to a further aspect of the invention, the object is achieved by a computer program loadable into a non-volatile data carrier communicatively connected to a processing unit. The computer program includes software for executing the above method when the program is run on the processing unit.

According to another aspect of the invention, the object is achieved by a non-volatile data carrier containing the above computer program.

According to another aspect of the invention, the object is achieved by a brake system for a rail vehicle. The brake system includes an electrically operated brake unit configured to perform braking operations. The brake system also includes the above-proposed brake actuator, which is arranged to control the electrically operated brake unit. The above brake system is advantageous for the same reasons as presented above referring to the brake actuator.

According to one embodiment of this aspect of the invention, the brake system contains a Hall sensor and/or an absolute encoder, which is configured to generate the first sensor signal. Thus, the measured position of the output shaft of the electric motor may be conveniently reflected via the first sensor signal.

According to another embodiment of this aspect of the invention, the brake system contains a driver unit configured to generate a drive current to the electric motor based on the brake control signal. This allows for straightforward control of the at least one pressing member of the brake unit.

According to yet another embodiment of this aspect of the invention, the brake system includes a load-cell sensor, e.g. arranged in a gear-shaft mechanism between the electric motor and the at least one pressing member, which load-cell sensor is configured to generate an unfiltered sensor signal reflecting a magnitude of the applied force.

Preferably, the brake system further includes a filter unit configured to obtain the unfiltered sensor signal from the load-cell sensor, and in response thereto produce the second sensor signal as a lowpass-filtered version of the unfiltered sensor signal. This reduces the noise in the load-cell sensor signal and renders the design less sensitive to movements, such as in the form of rumble and jerk.

According to a further embodiment of this aspect of the invention, the alarm generated by the control unit, if, for the specified angular position, the second sensor signal reflects that the applied force is outside of an hysteresis margin from said linear relationship indicates: an error in the load-cell sensor, an encoder error, a mechanical malfunction, an electrical error and/or wear of the at least one pressing member. Thereby, adequate troubleshooting may be initiated based on the alarm.

Further advantages, beneficial features and applications of the present invention will be apparent from the following description and the dependent claims.

### BRIEF DESCRIPTION OF THE DRAWINGS

The invention is now to be explained more closely by means of preferred embodiments, which are disclosed as examples, and with reference to the attached drawings.
- Figure 1: schematically illustrates a brake system according to one embodiment of the invention;
- Figures 2a-b: show graphs illustrating a force exerted by the at least one pressing member and a speed demand on the electric motor as respective functions of time according to one embodiment of the invention;
- Figure 3: shows a graph exemplifying how a force-to-position mapping may be derived, which mapping describes a relationship between the specified angular position and the magnitude of the force applied by the at least one pressing member;
- Figure 4: exemplifies how the force-to-position mapping of Figure 3 may be employed according to one embodiment of the invention to control the at least one pressing member of the brake unit;
- Figure 5: illustrates how the control of the at least one pressing member may be verified during operation of a brake unit using the force-to-position mapping according to one embodiment of the invention;
- Figure 6: shows a block diagram illustrating a brake actuator according to one embodiment of the invention; and
- Figure 7: illustrates, by means of a flow diagram, the general method according to the invention.

### DETAILED DESCRIPTION

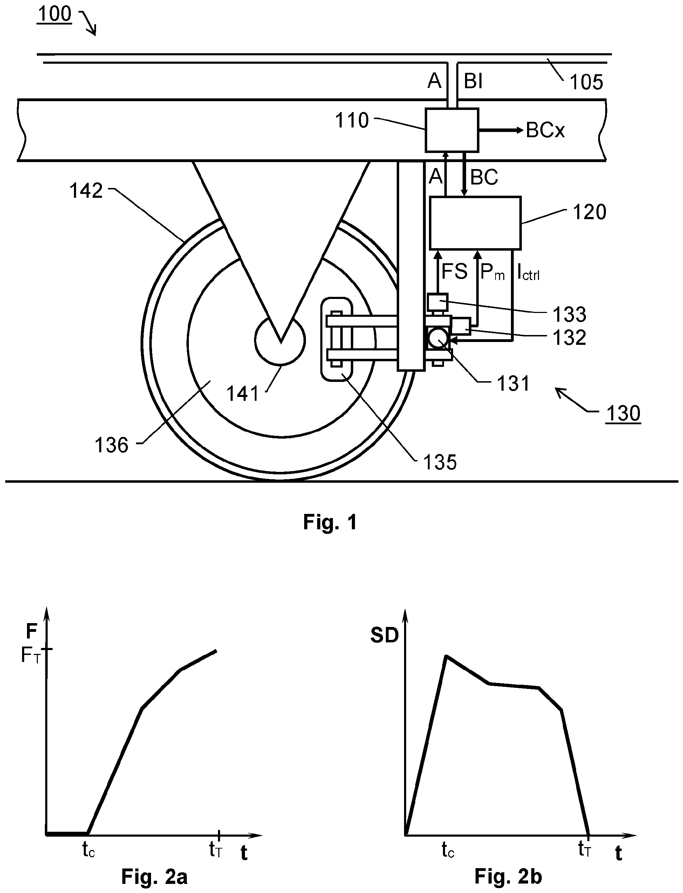

In Figure 1, we see a schematic illustration of a brake system according to one embodiment of the invention.

The brake system may include at least one brake controller 110 and a number of electrically operated brake units 130, which each is operated by a respective brake actuator 120. The brake actuator 120 is configured to receive a brake command BC, for example from the brake controller 110, and in response to the brake command BC control the electrically operated brake unit 130 to perform a braking operation. The braking operation typically involves applying a force, which has a set point in the form of a target force specified by the brake command BC. However, of course, according to the invention, the braking operation may also involve releasing the brake, or reducing an already applied brake force.

The brake command BC, in turn, may be generated based on a brake instruction BI from a train driver, and/or an automatic functionality in the rail vehicle 100 in which the brake system is comprised. The brake instruction BI may be forwarded to the brake controller 110 via a data bus105 in the rail vehicle 100.

According to one embodiment of the invention, the brake controller 110 is configured to send brake commands BCx to at least one additional brake actuator in the rail vehicle 100. Namely, typically, in a rail vehicle brake system, each brake controller 110 is arranged to control two or more brake controllers, for example in one rail vehicle.

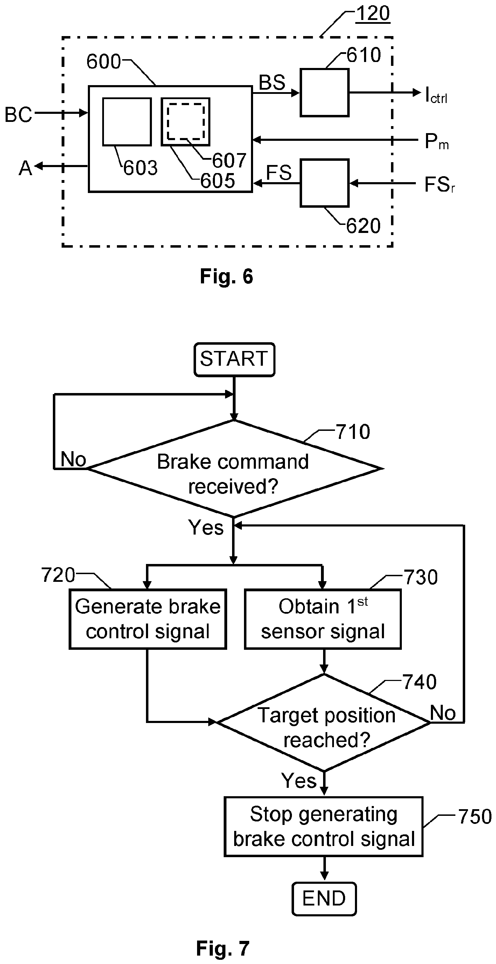

According to the invention, the brake actuator 120 contains a control unit 600 (see Figure 6), which is configured to generate a brake control signal BS based on the brake command BC. The brake control signal BS is adapted to control an electric motor 131 in the electrically operated brake unit 130 such that an output shaft of the electric motor 131 attains a specified angular position in which at least one pressing member 135 of the brake unit 130 is caused to apply a force against a rotating member 136 of the brake unit 130, for example via a gear-shaft mechanism. The applied force here aims at the target force. The rotating member 136 is mechanically connected to a wheel axle 141 of the rail vehicle 100. Consequently, the brake force applied by the at least one pressing member 135 against the rotating member 136 influences any rotation of said wheel axle 141.

According to one embodiment of the invention, the electric motor 131 is a brushless DC motor. This type of motor is advantageous because it enables high torque and high precision in a relatively small-sized format. For example, the brushless DC motor may be operated around 3000 rpm, which vouches for swift control of the at least one pressing member 135.

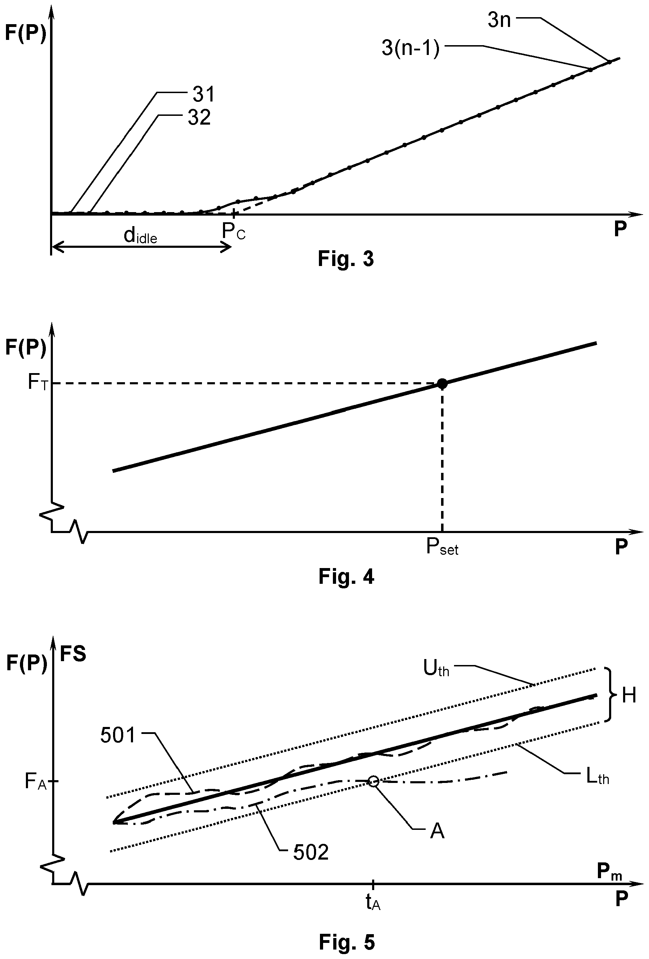

The control unit 600 is further configured to obtain a first sensor signal Pₘ reflecting a measured position of the output shaft of the electric motor 131, which measured position indicates the specified angular position, e.g. via an absolute encoder 132 producing ubiquitous angular data on a digital format. Alternatively, or additionally, the first sensor signal Pₘ may be produced by a Hall sensor included in the electric motor 131. The Hall sensor, however, as such, is typically less sensitive and somewhat slower than the absolute encoder. Due to the fix mechanical relationship between the specified angular position and the force applied by the at least one pressing member 135 onto the rotating member 136, the first sensor signal Pₘ also constitutes an indication of the target force. These matters will be discussed in further detail below referring to Figures 3 to 6.

Figure 2a shows a general graph illustrating a force F exerted by the at least one pressing member 135 onto the rotating member 136 as a function of time t according to one embodiment of the invention.

Figure 2b shows a corresponding graph that illustrates a speed demand SD on the electric motor 131 as function of time t when the at least one pressing member 135 is controlled to apply the force F onto the rotating member 136.

Up to a point in time t_{c}, the at least one pressing member 135 moves towards the rotating member 136 without making any contact with it. Thus, until t_{c}, no force F is applied by the at least one pressing member 135, and, during this period, the speed demand SD is relatively high on the electric motor 131. Once the at least one pressing member 135 has made contact with the rotating member 136, the force F applied by the at least one pressing member 135 increases rapidly and the speed demand SD lowers gradually until the target force F_{T} has been attained.

According to one embodiment of the invention, the control unit 600 is configured to generate the brake control signal BS until the first sensor signal Pₘ attains a value indicating that the target force F_{T} is estimated to have been reached.

As illustrated in Figure 6, according to one embodiment of the invention, the brake actuator 120 may include a driver unit 610 configured to generate a drive current l_{ctrl} based on the brake control signal BS, which drive current l_{ctrl} is adapted to control the electric motor 131, such that its output shaft rotates in a desired direction causing the at least one pressing member 135 to either move towards or away from the rotating member 136.

Referring now to Figure 3, which shows a graph exemplifying how the force F(P) applied to the rotating member 136 by the at least one pressing member 135 as a function of the angular position P of the rotating shaft of the electric motor 131. According to the invention, the relationship shown in Figure 3 is used to control the electric motor 131.

For each of a set of angular positions P, the respective force F(P) applied to the rotating member 136 is registered, e.g. by a load-cell sensor, and is plotted as a function of the angular position P. Figure 3 exemplifies data points 31, 32, ..., 3(n-1) and 3n respectively for such a set of angular positions P. As can be seen, the relationship between the angular position P and the respective force F(P) is almost perfectly linear except around an angular position Pc, where the at least one pressing member 135 begins to make contact with the rotating member 136. Preferably, therefore, the measurements of the force F(P) around the contact angular position Pc are discarded. Instead, a linear function based on measurements of the positions when the at least one pressing member 135 makes solid contact with the rotating member 136 is extrapolated to the intersection point with the P axis in order to determine the contact angular position Pc. The distance from P = 0 to P = Pc may represent the so-called idle distance d_{idle}, i.e. the distance covered by the at least one pressing member 135 from its starting position to the rotating member 136 when controlling the brake unit 130 to initiate a braking action after having been arranged to allow the axle 141 to rotate freely.

The above linear force-to-position relationship is mapped, such that for any given force F(P) there is a corresponding angular position P. Therefore, to attain a particular force F(P) it is sufficient to control the at least one pressing member 135 to a certain angular position P, i.e. without any feedback in terms of measurement of the force F(P) during the control process. This renders the control process extremely fast, which, in turn, translates into short braking distances.

In other words, as illustrated in the diagram of Figure 4, the proposed control principle relies on an unambiguous relationship between the target force F_{T} specified by the brake command BC and a specified angular position Pₛₑₜ of the output shaft of the electric motor 131, such that the target force F_{T} may be attained by the output shaft of the electric motor 131 to the specified angular position Pₛₑₜ.

Due to wear of the at least one pressing member 135 and the rotating member 136, the force-to-position mapping must, however, be repeatedly updated/recalibrated during operation of the brake system. Preferably, in connection with placing the rail vehicle 100 into operation after a period of inactivity, e.g. at the beginning of each work shift, the force-to-position mapping is zeroed. This means that the contact angular position Pc is determined and a desired idle distance d_{idle} is set, for instance as described above.

Moreover, at repeated occasions during operation, e.g. at every n:th braking, the control unit 600 is configured to verify that force-to-position mapping is accurate by obtaining feedback data about the force actually applied by the at least one pressing member 135 against the rotating member 136. Therefore, according to one embodiment of the invention, the control unit 600 is further configured to obtain a second sensor signal FS, e.g. from a load-cell sensor 133 in the gear-shaft mechanism, which second sensor signal FS reflects a magnitude of the force applied by at least one pressing member 135 against the rotating member 136. Specifically, the control unit 600 is here configured to check the second sensor signal FS against the force-to-position mapping describing the linear relationship between the specified angular position P and the estimated magnitude of the force applied by the at least one pressing member 135 against the rotating member 136.

In order to avoid introducing delay into the control process, the control unit 600 is preferably configured to await checking the second sensor signal FS against the force-to-position mapping until after having obtained the indication via the first sensor signal Pₘ that the specified angular position P has been attained, and thus also that the target force F_{T} has been attained.

If said check reveals that the contact angular position Pc is systematically displaced to a higher value, however the linear function maintains its gradient, this is a sign of wear on the at least one pressing member 135 and/or the rotating member 136. It is straightforward for the control unit 600 to compensate for such wear by simply adjusting the idle distance d_{idle} by an amount equal to the displacement of the contact angular position Pc.

Of course, minor variations from the force-to-position mapping must be accepted without performing any modifications. For instance, fluctuations will occur due to stochastic errors in the first sensor signal Pₘ, e.g. resulting from rounding errors in the absolute encoder 132, the electric motor 131 slips and/or stalls temporarily when the at least one pressing member 135 is pressed against the rotating member 136. Alternatively, or additionally, extreme temperature variations and/or poor lubrication of the moving parts in the brake unit may cause unpredictable variations in the first sensor signal Pₘ. Therefore, referring now to Figure 5, the control unit 600 is preferably configured to accept variations around a hysteresis margin H from the linear relationship expressed by the force-to-position mapping. The hysteresis margin H may be defined as a band between an upper threshold level Utn above a lower threshold level Lₜₕ and below respectively the linear function describing the applied force F(P) as a function of the angular position P, as illustrated in Figure 5.

According to one embodiment of the invention, the control unit 600 is configured to generate an alarm A, if, for a specified angular position P, the second sensor signal FS reflects that the applied force F(P) is outside of the hysteresis margin H.

Depending on how the hysteresis margin H is broken, the alarm A may be supplemented by additional data, for example indicating an error in the load-cell sensor 133, error in the absolute encoder, a mechanical malfunction, e.g. in the at least one pressing member 135 or in the gear-shaft mechanism, an electrical error and wear of the at least one pressing member 135 and/or rotating member 136.

Figure 5 shows a first graph 501 illustrating a relationship between the applied force F(P) reflected by the second sensor signal FS that is acceptable, and a second graph 502 illustrating a relationship between the applied force F(P) reflected by the second sensor signal FS that causes the control unit 600 to generate the alarm A at a point in time t_{A} when the second graph 502 falls outside of the lower threshold level Ltn.

Figure 6 shows a block diagram illustrating a brake actuator 120 according to one embodiment of the invention. Here, the brake actuator 120 contains a driver unit 610 and a filter unit 620. The driver unit 610 is configured to generate a drive current l_{ctrl} to the electric motor 131 based on the brake control signal BS. The filter unit 620 is configured to obtain an unfiltered sensor signal FSᵣ, e.g. from the absolute encoder 132, and in response thereto, produce the second sensor signal FS as a lowpass-filtered version of the unfiltered sensor signal FSᵣ. It is generally advantageous to lowpass filter the unfiltered sensor signal FS, because this renders the design less sensitive to movements, such as in the form of rumble and jerk.

In the embodiment shown in Figure 6, both the driver unit 610 and the filter unit 620 are included into the control loop for the brake unit. Inevitably, each of the units 610 and 620 introduces a respective delay in the control loop. Preferably, therefore, the above force-to-position mapping reflects the expected delay between generating the brake control signal BS and obtaining the second sensor signal FS, which expected delay depends on a signal passage through the units 610 and/or 620 whichever unit is included in the control loop. It is further preferable if the force-to-position mapping reflects an expected delay, which is due an inertia of the electric motor 131.

It is generally advantageous if the control unit 600 is configured to effect the above-described procedure by executing a computer program. Therefore, the control unit 600 may include a memory unit 605, i.e. non-volatile data carrier, storing a computer program 607, which, in turn, contains software for making processing circuitry in the form of a processor 603 in the control unit 600 execute the actions mentioned in this disclosure when the computer program 607 is run on the processor 603.

In order to sum up, and with reference to the flow diagram in Figure 7, we will now describe the computer-implemented method according to the invention which is performed in the processing unit 603 of the control unit 600.

In a first step 710, it is checked whether a brake command has been received, which brake command specifies a target force. If such a brake command has been received, steps 720 and 730 follow. Otherwise, the procedure loops back and stays in step 710.

Step 720 generates a brake control signal based on the brake command, which brake control signal is adapted to control an electric motor in an electrically operated brake unit such that an output shaft of the electric motor attains a specified angular position in which at least one pressing member is caused to apply a force against a rotating member being mechanically connected to a wheel axle of the rail vehicle, which applied force has the target force as a set point.

In step 730, which is executed in parallel with step 720, a first sensor signal is obtained, which reflects a measured position of the output shaft of the electric motor. Due to a one-to-one relationship between specified angular position and the target force, the measured position constitutes an indication of target force.

Subsequent to steps 720 and 730, a step 740 checks whether the measured position designates that a target position equivalent to the target force has been reached. If so, a step 750 follows; and otherwise, the procedure loops back to steps 720 and 730 for continued control of the at least one pressing member.

After step 750, the procedure ends.

The process steps described with reference to Figure 7 may be controlled by means of a programmed processor. Moreover, although the embodiments of the invention described above with reference to the drawings comprise processor and processes performed in at least one processor, the invention thus also extends to computer programs, particularly computer programs on or in a carrier, adapted for putting the invention into practice. The program may be in the form of source code, object code, a code intermediate source and object code such as in partially compiled form, or in any other form suitable for use in the implementation of the process according to the invention. The program may either be a part of an operating system, or be a separate application. The carrier may be any entity or device capable of carrying the program. For example, the carrier may comprise a storage medium, such as a Flash memory, a ROM (Read Only Memory), for example a DVD (Digital Video/Versatile Disk), a CD (Compact Disc) or a semiconductor ROM, an EPROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal which may be conveyed via electrical or optical cable or by radio or by other means. When the program is embodied in a signal, which may be conveyed, directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

Variations to the disclosed embodiments can be understood and effected by those skilled in the art in practicing the claimed invention, from a study of the drawings, the disclosure, and the appended claims.

The term "comprises/comprising" when used in this specification is taken to specify the presence of stated features, integers, steps or components. The term does not preclude the presence or addition of one or more additional elements, features, integers, steps or components or groups thereof. The indefinite article "a" or "an" does not exclude a plurality. In the claims, the word "or" is not to be interpreted as an exclusive or (sometimes referred to as "XOR"). On the contrary, expressions such as "A or B" covers all the cases "A and not B", "B and not A" and "A and B", unless otherwise indicated. The mere fact that certain measures are recited in mutually different dependent claims does not indicate that a combination of these measures cannot be used to advantage. Any reference signs in the claims should not be construed as limiting the scope.

It is also to be noted that features from the various embodiments described herein may freely be combined, unless it is explicitly stated that such a combination would be unsuitable.

The invention is not restricted to the described embodiments in the figures, but may be varied freely within the scope of the claims.

## Claims

1. A brake actuator (120) for a rail vehicle (100), which brake actuator (120) is configured to receive a brake command (BC) and in response thereto control an electrically operated brake unit (130) to perform a braking operation, **characterized in that** the brake actuator (120) comprises a control unit (600) configured to:
generate a brake control signal (BS) based on the brake command (BC), which brake control signal (BS) is adapted to control an electric motor (131) in the electrically operated brake unit (130) such that an output shaft of the electric motor (131) attains a specified angular position (P) in which at least one pressing member (135) is caused to apply a force against a rotating member (136) being mechanically connected to a wheel axle (141) of the rail vehicle (100), which applied force has a set point in the form of a target force (F_{T}) specified by the brake command (BC), and
obtain a first sensor signal (Pₘ) reflecting a measured position of the output shaft of the electric motor (131), which measured position constitutes an indication of the specified angular position (P).

2. The brake actuator (120) according to claim 1, wherein the control unit (600) is configured to generate the brake control signal (BS) until the first sensor signal (Pₘ) attains a value indicating that the target force (F_{T}) is estimated to have been reached.

3. The brake actuator (120) according to any one of claims 1 or 2, wherein the control unit (600) is further configured to:
obtain a second sensor signal (FS) reflecting a magnitude of the applied force, and
check the second sensor signal (FS) against a force-to-position mapping describing a linear relationship between the specified angular position (P) and an estimated magnitude of the applied force.

4. The brake actuator (120) according to claim 3, wherein the control unit (600) is configured to await checking the second sensor signal (FS) against the force-to-position mapping until after having obtained the indication via the first sensor signal (Pₘ) that the specified angular position (P) and the target force (F_{T}) have been attained.

5. The brake actuator (120) according to any one of claims 3 or 4, wherein the force-to-position mapping reflects an expected delay between generating the brake control signal (BS) and obtaining the second sensor signal (FS), which delay is introduced by at least one of:
the electric motor (131), and
at least one component (610, 620) comprised in a control loop for the electric motor (131), which control loop is arranged between the control unit (600) and the electric motor (131).

6. The brake actuator (120) according to claim 5, wherein the control loop comprises at least one of:
a driver unit (610) configured to generate a drive current (l_{ctrl}) to the electric motor (131) based on the brake control signal (BS), and
a filter unit (620) configured to obtain an unfiltered sensor signal (FSᵣ) and in response thereto produce the second sensor signal (FS) as a lowpass-filtered version of the unfiltered sensor signal (FSᵣ).

7. The brake actuator (120) according to any one of claims 3 to 6, wherein, if, for the specified angular position (P), the second sensor signal (FS) reflects that the applied force (F(P)) is outside of an hysteresis margin (H) from said linear relationship, the control unit (600) is configured to generate an alarm (A).

8. The brake actuator (120) according to any of the preceding claims, wherein the control unit (600) is configured to receive the brake command (BC) from a brake controller (110), which, in turn, is configured to send brake commands (BCx) to at least one further brake actuator in the rail vehicle (100).

9. A computer-implemented method for controlling an electrically operated brake unit (130) in a rail vehicle (100), which method is performed in a control unit (600) of a brake actuator (120) in the rail vehicle, and which method comprises:
receiving a brake command (BC) and in response thereto
controlling an electrically operated brake unit (130) to perform a braking operation,
**characterized by** the method comprising:
generating a brake control signal (BS) based on the brake command (BC), which brake control signal (BS) is adapted to control an electric motor (131) in the electrically operated brake unit (130) such that an output shaft of the electric motor (131) attains a specified angular position (P) in which at least one pressing member (135) is caused to apply a force (F_{T}) against a rotating member (136) being mechanically connected to a wheel axle (141) of the rail vehicle (100), which applied force has a set point in the form of a target force (F_{T}) specified by the brake command (BC), and
obtaining a first sensor signal (Pₘ) reflecting a measured position of the output shaft of the electric motor (131), which measured position constitutes an indication of the specified angular position (P).

10. The method according to claim 9, comprising:
generate the brake control signal (BS) until the first sensor signal (Pₘ) attains a value indicating that the target force (F_{T}) is estimated to have been reached.

11. The method according to any one of claims 9 or 10, further comprising:
obtaining a second sensor signal (FS) reflecting a magnitude of the applied force, and
checking the second sensor signal (FS) against a force-to-position mapping describing a linear relationship between the specified angular position (P) and an estimated magnitude of the applied force.

12. The method according to claim 11, comprising:
awaiting to check the second sensor signal (FS) against the force-to-position mapping until after having obtained the indication via the first sensor signal (Pₘ) that the specified angular position (P) and the target force (F_{T}) have been attained.

13. The method according to any one of claims 11 or 12, wherein the force-to-position mapping reflects an expected delay between generating the brake control signal (BS) and obtaining the second sensor signal (FS), which delay is introduced by at least one of:
the electric motor (131), and
a control loop for the electric motor (131), which control loop is arranged between the control unit (600) and the electric motor (131).

14. The method according to claim 13, wherein the control loop comprises at least one of:
generating, in a driver unit (610), a drive current (l_{ctrl}) to the electric motor (131), which drive current (l_{ctrl}) is based on the brake control signal (BS), and
filtering, in a filter unit (620), an unfiltered sensor signal (FSᵣ) to produce the second sensor signal (FS) as a lowpass-filtered version of the unfiltered sensor signal (FSᵣ).

15. The method according to any of claims 11 to 14, wherein, if, for the specified angular position (P), the second sensor signal (FS) reflects that the applied force (F(P)) is outside of an hysteresis margin (H) from said linear relationship, the method comprises:
generating an alarm (A).

16. The method according to any of claims 9 to 15, comprising:
receiving the brake command (BC) from a brake controller (110), which, in turn, is configured to send brake commands (BCx) to at least one further brake actuator in the rail vehicle (100)s.

17. A computer program (607) loadable into a non-volatile data carrier (605) communicatively connected to processing circuitry (603), the computer program (607) comprising software for executing the method according to any one of claims 9 to 16 when the computer program (607) is run on the processing circuitry (603).

18. A non-volatile data carrier (605) containing the computer program (607) of the claim 17.

19. A brake system for a rail vehicle (100), which brake system comprises an electrically operated brake unit (130) configured to perform braking operations, **characterized in that** the brake system comprises the brake actuator (120) according to any one of claims 1 to 8, which brake actuator (120) is arranged to control the electrically operated brake unit (130).

20. The brake system according to claim 19, wherein the electrically operated brake unit (130) comprises:
at least one pressing member (135),
a rotating member (136) being mechanically connected to a wheel axle (141) of the rail vehicle (100), and
an electric motor (131) configured to receive the brake control signal (BS) generated by the brake actuator (120), which electric motor (131) comprises an output shaft configured to attain a specified angular position (P) in response to the control signal (BS) in which specified angular position (P) the at least one pressing member (135) is caused to apply a force against the rotating member (136), which applied force has a set point in the form of a target force (F_{T}) specified by the brake command (BC).

21. The brake system according to claim 20, wherein the electric motor (131) is a brushless DC motor.

22. The brake system according to any one of claims 20 or 21, comprising at least one of a Hall sensor and an absolute encoder (132) configured to generate the first sensor signal (Pₘ) reflecting the measured position of the output shaft of the electric motor (131).

23. The brake system according to any one of claims 19 to 22, comprising a driver unit (610) configured to generate a drive current (l_{ctrl}) to the electric motor (131) based on the brake control signal (BS).

24. The brake system according to any one of claims 19 to 23, comprising a load-cell sensor (133) configured to generate an unfiltered sensor signal (FSᵣ) reflecting a magnitude of the applied force.

25. The brake system according to claim 24, comprising a filter unit (620) configured to:
obtain the unfiltered sensor signal (FSᵣ) from the load-cell sensor (133) and in response thereto
produce the second sensor signal (FS) as a lowpass-filtered version of the unfiltered sensor signal (FSᵣ).

26. The brake system according to any one of claims 19 to 25, comprising a brake controller (110) configured to produce the brake command (BC) in response to a brake instruction (BI).

27. The brake system according to any one of claims 19 to 26, wherein the alarm (A) generated by the control unit (600) if, for the specified angular position (P), the second sensor signal (FS) reflects that the applied force (F(P)) is outside of an hysteresis margin (H) from said linear relationship indicates at least one of: an error in the load-cell sensor (133), an encoder error, a mechanical malfunction, an electrical error and wear of the at least one pressing member (135).
